# EUROPEAN PATENT APPLICATION

(11) **EP 2 365 610 A1**
(43) Date of publication of application: **14.09.2011**
(21) Application number: 10002429.8
(22) Date of filing: 09.03.2010
(51) Int. Cl.: H02K 1/32, H02K 9/16

(54) **Electrical motor incorporating internal rotor cooling**

(71) Applicant: SIEMENS AKTIENGESELLSCHAFT, 80333 München (DE)
(72) Inventor: Andersen, Soeren Boegh, 3000 Helsingoer (DK); Lyquist, Joergen, 3140 Alsgarde (DK)

(57) **Abstract**

An electrical motor (1) includes a shaft (3) and a rotor (2) mounted upon said shaft (3). The shaft (3) comprises an inlet (8) for cooling air, and an internal passageway (10A, 10B) for conducting cooling airflow (9) through said inlet (8) caused by rotation of said shaft (3). The passageway includes a first portion (10A) extending axially through the shaft (3) along a longitudinal portion (11) of the shaft (3) upon which portion (11) said rotor (2) is mounted, and a second portion (10B) extending radially outwardly from said first portion (10A) and leading to an airflow outlet (12) on an outer surface (13) of said shaft (3).

## Description

The present invention relates to electrical motors, and, in particular, to an electrical motor having internal rotor cooling.

Electric motors of various types are commonly found in industrial, commercial and consumer settings. In industry, motors are employed to drive various kinds of machinery, such as compressors, pumps, fans and so forth, to mention only a few. These motors generally include a stator having a multiplicity of coils surrounding a rotor. The rotor is typically mounted on a rotatable shaft supported by bearings for rotation in a motor housing. When power is applied to the motor, an electromagnetic relationship between the stator and the rotor causes the rotor to rotate. The shaft translates the rotor's movement into a driving force for a given piece of machinery. That is, rotation of the shaft drives the machine to which it is coupled.

During operation, conventional motors generate heat. For example, the physical interaction of the motor's various moving components produces heat by way of friction. Additionally, the electromagnetic relationships between the stator and the rotor produce currents that, in turn, generate heat due to resistive heating, for example. In particular, at high speed operation, the rotor is prone to being excessively heated. The excess heat, if left unabated may degrade the performance of the motor. Worse yet, excess heat may contribute to any number of malfunctions, which may lead to system downtime and require maintenance. Moreover, localized high operating temperatures (i.e., hotspots) sustained over time may lead to premature malfunction of the given location. Undeniably, reduced efficiency and malfunctions are undesirable events that may lead to increased costs.

To dissipate heat and to maintain the rotor within acceptable operating temperatures, conventional motors route a coolant, such as forced air or liquid circulated around the rotor, for example, using an external fan.

The object of the present invention is to provide internal cooling of the rotor using ambient air, obviating the need for forced circulation of air or liquid around the rotor.

The above object is achieved by the motor according to claim 1, and the method according to claim 6.

The underlying idea of the present invention is to internally cool the rotor of an electrical motor by providing the shaft with an inlet for cooling air, and an internal passageway for conducting airflow from the inlet internally through the shaft. The passageway has a first portion extending axially through the shaft along a portion of the length of the shaft upon which the rotor is mounted, and a second portion extending radially outwardly from the first portion to an air flow outlet on the outer surface of the shaft. During operation of the motor, the rotating shaft functions as a centrifugal pump, whereby air is sucked in through the inlet and conducted axially through the first portion of the passageway. The internal cooling airflow through the shaft absorbs heat from the rotor surrounding the shaft to cool the rotor. Due to the centrifugal action caused by the rotation of the shaft, the air from the first portion of the passageway is forced to flow radially outwardly toward the air flow outlet via the second portion of the passageway. Thus a continuous flow of cooling air is maintained without the need of forced circulation, for example by an external fan.

In one embodiment, the shaft is manufactured to have a central hole extending axially to one end of the shaft, said central hole forming said inlet at said end of the shaft and defining the first portion of said passageway, and wherein the shaft is manufactured to further have a plurality of radial holes extending from said central hole to the outer surface of the shaft, said radial holes defining the second portion of said passageway.

In one embodiment, the shaft has a rotation speed greater than 20000 revolutions per minute. Motor operation at such high speeds enhances the centrifugal action on the air and thus leads to effective cooling of the rotor.

In an exemplary embodiment, said motor is an induction motor.

The present invention is further described hereinafter with reference to illustrated embodiments shown in the accompanying drawings, in which:
FIG is a cross-sectional view of a portion of an electrical motor in accordance with one embodiment of the present invention, and

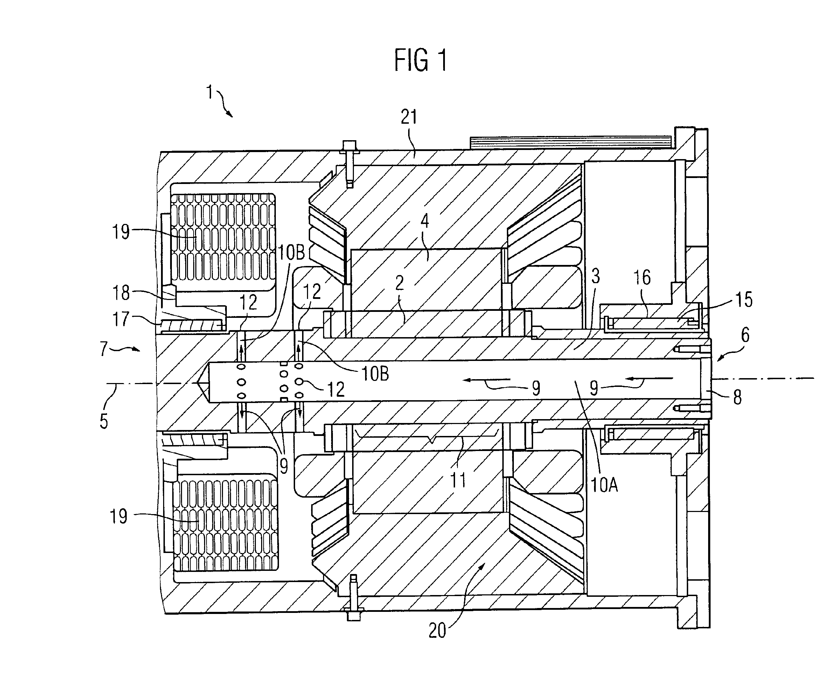

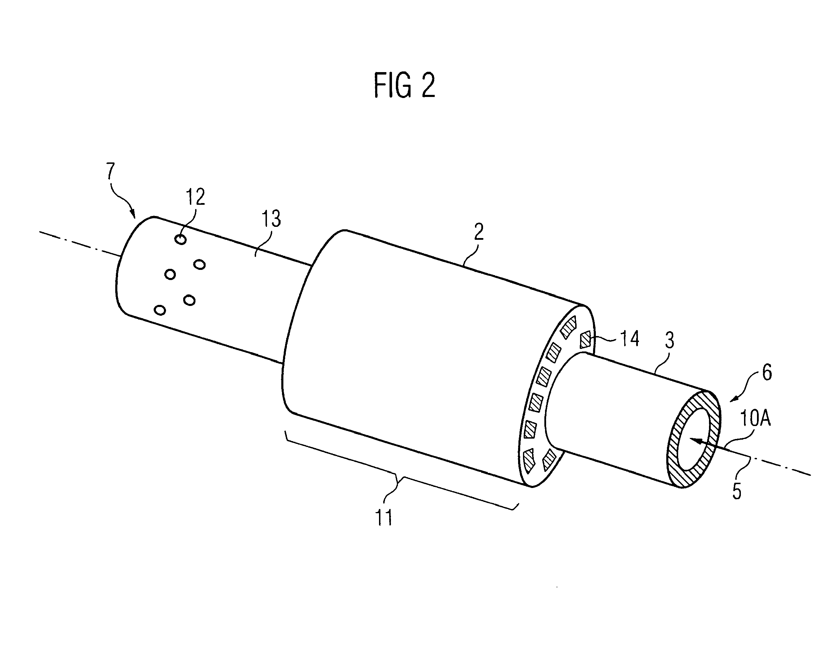

FIG 2 is a perspective view of the rotor of the electrical motor of FIG 1.

Referring now to FIG 1 is illustrated an exemplary electrical motor 1 according to one embodiment of the present invention. The illustrated motor 1 is an induction motor that may be used to drive industrial machinery, such as compressors, pumps, fans etc. It would however be appreciated that the present invention may be equally used in synchronous or permanent magnet motors.

The motor 1 includes a rotor 2 mounted along a shaft 3 rotatable about an axis 5. FIG 2 shows a perspective view of the rotor 2 mounted on the shaft 3. As shown, the illustrated rotor 2 is made up bars of conductors 14, made, for example of copper, extending along the length of the rotor 2. Alternately, the rotor 2 may comprise a solid conductive core mounted on the shaft 3. Referring back to FIG 1, a stator 4 surrounds the rotor 2. The stator 4 includes, for example, field windings connected to an AC power supply.

When the stator windings are energized by power supply, a rotating magnetic field is produced, which sweeps past the rotor 2. This changing magnetic field pattern induces current in the rotor conductors 14. The current in the rotor 2 interacts with the rotating magnetic field created by the stator 4 and, in effect, cause a rotational motion on the rotor 2. The shaft 3 transmits the rotational movement of the rotor 2 to drive, for example, industrial machinery, connected to the end 7 of the shaft 3. The driven machinery connected to the end 7 of the shaft may include, for example, a compressor, pump, fan, and so forth.

The shaft 3 is supported on either ends by bearings 15 and 17, for example, including foil bearings, contained in respective bearing housings 16 and 18. The rotor 2 and the stator 4 are surrounded by insulative bushings 20 having axial channels. The entire assembly is contained in a motor housing 21.

As mentioned earlier, during operation, the motor 1 generates heat. For example, the physical interaction of the motor's various moving components produces heat by way of friction. Additionally, the electromagnetic relationships between the stator 4 and the rotor 2 produce currents that, in turn, generate heat due to resistive heating, for example. In particular, at high speed operation, for example, for rotational speeds greater than 20000 revolutions per minute the rotor 2 is prone to being excessively heated.

The present invention addresses the problem by providing an internal cooling of the rotor 2. The discussion hereinafter may be best understood referring jointly to FIGS 1 and 2. As illustrated, in accordance with the present invention, the shaft 3 includes an inlet 8 for cooling air, which, in the illustrated example, is ambient air. The shaft 3 further includes a passageway 10A, 10B for conducting cooling airflow 9 from the inlet 8 internally through the shaft 3. The passageway has a first portion 10A extending axially, i.e., along the rotation axis 5, along a portion 11 of the length of the shaft 3 upon which the rotor 2 is mounted. The passageway further has a second portion 10B extending radially outwardly from the first portion to an airflow outlet 12 on the outer surface 13 of the shaft 3.

During operation of the motor 1, the rotating shaft 3 functions as a centrifugal pump, whereby cooling air (i.e., ambient air, in this example) is sucked in through the inlet 8 and conducted axially through the first portion 10A of the passageway. The internal cooling airflow 9 through the shaft absorbs heat from the rotor 2 surrounding the shaft 3 to cool the rotor 2. Due to the centrifugal action caused by the rotation of the shaft 3, the air from the first portion 10A of the passageway is caused to flow radially outwardly toward the airflow outlet 13 via the second portion 10B of the passageway. Thus a continuous flow of cooling air is maintained without the need of forced circulation, for example by an external fan. The centrifugal action is enhanced at high rotational speeds of the shaft, to effect increased cooling at such high speeds.

In one embodiment, the shaft 3 may be manufactured as a hollow shaft, including a central axial hole extending at least along a longitudinal portion 11 of the shaft 3, to one end 6 of the shaft. The central hole thus forms the airflow inlet 8 at the end 6 of the shaft, and further defines the first portion 10A of the internal passageway. The shaft 3 may additionally include radial holes defining the second portion 10B of the internal passageway. As shown, the radial holes extend from the portion 10A of the passageway defined by the central hole to the airflow outlet at the outer surface 13 of the shaft 3. As illustrated, several circumferentially spaced out radial holes of the above-mentioned nature may be provided multiple longitudinal locations along the shaft 3. The airflow 9 conducted out of the radial holes may exit the housing 21 through a ventilating grid 19 provided on the housing 21.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the spirit or scope of the present invention as defined by the below-mentioned patent claims.

## Claims

1. An electrical motor (1), comprising:
- a shaft (3) and a rotor (2) mounted upon said shaft (3), the shaft (3) further comprising:
- an inlet (8) for cooling air, and
- an internal passageway (10A, 10B) for conducting cooling airflow (9) through said inlet (8) caused by rotation of said shaft (3), wherein said passageway includes a first portion (10A) extending axially through the shaft (3) along a longitudinal portion (11) of the shaft (3) upon which portion (11) said rotor (2) is mounted, and a second portion (10B) extending radially outwardly from said first portion (10A) and leading to an airflow outlet (12) on an outer surface (13) of said shaft (3).

2. The motor (1) according to claim 1, wherein said shaft (3) has a central hole extending axially to one end (6) of the shaft (3), said central hole forming said inlet (8) at said end (6) of the shaft (3) and defining the first portion (10A) of said passageway, and wherein the shaft (3) further has a plurality of radial holes extending from the first portion (10A) of the passageway defined by said central hole to the outer surface (13) of the shaft (3), said radial holes defining the second portion (10B) of said passageway.

3. The motor (1) along any of the preceding claims, wherein said cooling air is ambient air.

4. The motor (1) according to any of the preceding claims, wherein the shaft (3) has a rotation speed greater than 20000 revolutions per minute.

5. The motor (1) according to any of the preceding claims, wherein said motor (1) is an induction motor.

6. A method of manufacturing an electrical motor (1), comprising:
- manufacturing a shaft (3) having an inlet (8) for cooling air and an internal passageway (10A, 10B) for conducting cooling airflow (9) through said inlet (8), wherein said passageway includes a first portion (10A) extending axially through the shaft (3) along a longitudinal portion (11) of the shaft (3), and a second portion (10B) extending radially outwardly from said first portion (10A) and leading to an airflow outlet (12) on an outer surface (13) of said shaft (3), and
- mounting a rotor (2) upon said shaft (3) along said longitudinal portion (11) of the shaft (3).

7. The method according to claim 5, wherein manufacturing said shaft (3) comprises:
- forming a central hole extending axially to one end (6) of the shaft (3), said central hole forming said inlet (8) at said end (6) of the shaft (3) and defining the first portion (10A) of said passageway, and
- forming a plurality of radial holes extending from said first portion (10A) of the passageway defined by said central hole to the outer surface (13) of the shaft (3), said radial holes defining the second portion (10B) of said passageway.
